# EUROPÄISCHE PATENTANMELDUNG

(11) **EP 2 869 418 A2**
(43) Veröffentlichungstag der Anmeldung: **06.05.2015**
(21) Anmeldenummer: 14161909.8
(22) Anmeldetag: 27.03.2014
(51) Int. Cl.: H02G 9/06, H02G 3/04, H02G 3/06

(54) **Verwendung einer Rohranordnung**

(30) Priorität: 29.10.2013 DE 102013111898
(71) Anmelder: REHAU AG + Co, 95111 Rehau (DE)
(72) Erfinder: Winterling, Ralf, 91074 Herzogenaurach (DE)

(57) **Zusammenfassung**

Die Erfindung betrifft die Verwendung einer Rohranordnung (1), umfassend wenigstens ein Rohr (2) und wenigstens eine Rohrverbindungsmuffe (3), die mit dem Rohr (2) fluiddicht verbunden ist und die mit einem weiteren Rohr (2) fluiddicht verbindbar ist, wobei das Rohr (2) und die Rohrverbindungsmuffe (3) eine Wandung (2.1, 3.1) aufweisen, die ein thermoplastisches Polymermaterial enthält, mit folgenden Merkmalen
- das thermoplastische Polymermaterial ist ausgewählt aus einem Polyolefin, bevorzugt aus einem Polyethylen oder einem Polypropylen oder einem Polyisobutylen oder einem Copolymer der vorgenannten Polymere, oder einem halogenhaltigen Polymermaterial, bevorzugt einem Polyvinylchlorid oder einem Polyvinylidenfluorid,
- das Polymermaterial ist thermisch stabilisiert,
- das E-Modul des Polymermaterials bei 60°C ist für Polyethylen >= 150 N/mm², für Polypropylen >= 400 N/mm²,
- die Innenoberfläche (2.3, 3.3) der Wandung des Rohres (2) und / oder der Rohrverbindungsmuffe (3) ist gleitfähig modifiziert,

zur Aufnahme wenigstens eines Höchstspannungskabels (4).

## Beschreibung

Die Erfindung betrifft die Verwendung einer Rohranordnung zur Aufnahme eines Höchstspannungskabels. Daneben betrifft die Erfindung auch eine Stromleitungsanordnung, die eine solche Rohranordnung nutzt.

Die durch den Ausbau der erneuerbaren Energien stark voranschreitende Nutzung von Offshore- und Onshore-Windparkanlagen, Wasserkraftanlagen, Photovoltaik-Anlagen und die Verstromung von Biogas machen es erforderlich, die dezentral erzeugte elektrische Energie Verbrauchern zuzuleiten. Hierzu wird verstärkt auf die Anordnung von Höchstspannungskabeln unter der Erde gesetzt.

Bei derartigen Höchstspannungskabeln liegen Spannungen von mehr als 100 kV, meist 380 kV vor. Es sind entsprechende Vorkehrungen zu treffen, diese Kabel zu schützen.

Daneben wird bei der Stromleitung im Höchstspannungskabel Wärme produziert. Diese ist in geeigneter Weise in den umgebenden Erdboden abzuleiten.

Hier setzt die Erfindung ein, die es sich zur Aufgabe gemacht hat, eine Rohranordnung zu verwenden, um darin ein Höchstspannungskabel aufzunehmen. Die Rohranordnung soll das Höchstspannungskabel effektiv schützen, dabei leicht und dauerhaft sein, der erzeugten Wärme langfristig widerstehen, sowie ein einfaches Einbringen des Höchstspannungskabels in das Lumen der Rohranordnung ermöglichen und darüberhinaus kostengünstig sein.

Eine weitere Aufgabe der vorliegenden Erfindung ist es, eine Stromleitungsanordnung anzugeben, die eine derartige Rohranordnung nutzt.

Erfindungsgemäß wird die Aufgabe, eine Rohranordnung zu verwenden, um darin ein Höchstspannungskabel aufzunehmen, durch die im kennzeichnenden Teil des Anspruchs 1 angegebenen Merkmale gelöst.

Weitere vorteilhafte Ausgestaltungen der Erfindung sind in den Unteransprüchen angegeben.

Die vorliegende Aufgabe wird gelöst durch die Verwendung einer Rohranordnung, umfassend wenigstens ein Rohr und wenigstens eine Rohrverbindungsmuffe, die mit dem Rohr fluiddicht verbunden ist und die mit einem weiteren Rohr fluiddicht verbindbar ist, wobei das Rohr und die Rohrverbindungsmuffe eine Wandung aufweisen, die ein thermoplastisches Polymermaterial enthält.

Das thermoplastische Polymermaterial weist dabei folgende Merkmale auf:
- das thermoplastische Polymermaterial ist ausgewählt aus einem Polyolefin, bevorzugt aus einem Polyethylen oder einem Polypropylen oder einem Polyisobutylen oder einem Copolymer der vorgenannten Polymere, oder einem halogenhaltigen Polymermaterial, bevorzugt einem Polyvinylchlorid oder einem Polyvinylidenfluorid,
- das Polymermaterial ist thermisch stabilisiert,
- das E-Modul des Polymermaterials bei 60 °C ist für Polyethylen >= 150 N/mm², für Polypropylen >= 400 N/mm²,
- die Innenoberfläche der Wandung des Rohres und / oder der Rohrverbindungsmuffe ist gleitfähig modifiziert.

Die Rohranordnung gemäß vorstehender Beschreibung eignet sich in ganz besonders guter Weise zur Aufnahme eines Höchstspannungskabels. In der Rohranordnung gemäß vorstehender Beschreibung können auch mehr als ein Höchstspannungskabel angeordnet sein, beispielsweise zwei oder drei oder weitere.

In einer Fortbildung der vorliegenden Erfindung kann mit großem Vorteil das thermoplastische Polymermaterial ein Polyethylen mit erhöhter Temperaturbeständigkeit, insbesondere ein PE-RT (Polyethylen of Raised Temperature resistance), ausgewählt aus einem Ethylen-Octen-Copolymer sein.

Da von einem stromdurchflossenen Höchstspannungskabel große Wärmemengen abgegeben werden, eignet sich ein thermoplastisches Polymermaterial wie vorstehend beschrieben sehr gut für die Rohranordnung der vorliegenden Erfindung.

In einer Fortbildung der Verwendung einer Rohranordnung gemäß vorliegender Erfindung kann vorgesehen sein, dass das Rohr und die Rohrverbindungsmuffe das gleiche Polymermaterial enthalten.

Durch das Vorsehen, dass das Rohr und die Rohrverbindungsmuffe das gleiche Polymermaterial enthalten, lässt sich eine sehr günstige Rohranordnung schaffen, indem die technischen Eigenschaften, wie beispielsweise die Langzeitstabilität, das Ausdehnungsverhalten etc. bei Rohr und bei der Rohrverbindungsmuffe gleich sind, was die Gebrauchseigenschaften verbessert.

In einer bevorzugten Ausführungsform der vorliegenden Erfindung ist vorgesehen, dass das Rohr und die Rohrverbindungsmuffe durch eine Stecktechnik und / oder eine Schweißtechnik und / oder eine Klebetechnik miteinander verbunden sind.

Durch eine der vorgenannten Techniken oder durch eine Kombination der vorgenannten Techniken lässt sich das Rohr und die Rohrverbindungsmuffe mit hoher Sicherheit fluiddicht, schnell und dauerhaft verbinden.

Weiterhin ist eine solche Verbindungstechnik einfach vorzunehmen und lässt sich insbesondere unter Baustellenbedingungen in sicherer Weise ausführen.

Von besonderem Vorteil ist eine Weiterbildung der vorliegenden Erfindung, bei der vorgesehen ist, dass das thermoplastische Polymermaterial einen wärmeleitenden Zuschlagsstoff, ausgewählt aus einem Metall und / oder einem Glas und / oder einem Metalloxid und / oder einem Metallhalogenid und / oder einem Metallsulfat und / oder einem Metallphosphat und / oder einem Metallsilikat und / oder einem Metallcarbonat enthält.

Durch das Vorsehen eines wärmeleitenden Zuschlagsstoffes, der im thermoplastischen Polymermaterial enthalten ist, kann die Wärme, die beim Stromfluss durch das Höchstspannungskabel entsteht, in effektiver Weise durch die Wandung der Rohranordnung an den Erdboden abgeführt werden.

Damit lässt sich die Temperatur in der Rohranordnung senken bzw. damit kann die auftretenden Temperatur in der Rohranordnung auf einen Maximalwert begrenzt werden.

In einer sehr günstigen Ausführungsform der vorliegenden Erfindung ist vorgesehen, dass angrenzend an die Wandung des Rohres und / oder der Rohrverbindungsmuffe und mit dieser Wandung verbunden wenigstens eine weitere Schicht vorhanden ist.

Durch das Vorsehen wenigstens einer weiteren Schicht an der Wandung des Rohres und / oder an der Wandung der Rohrverbindungsmuffe kann die Rohranordnung der vorliegenden Erfindung weiter verbessert werden, indem beispielsweise diese Wandung eine Funktion erfüllt.

So kann in einer weiteren Fortbildung der vorliegenden Erfindung vorgesehen sein, dass an der Außenoberfläche des Rohres und / oder der Rohrverbindungsmuffe eine Schicht angeordnet ist, die insbesondere eine Schutzschicht oder eine Gleitschicht oder eine Markierungsschicht oder eine Wärmeleitschicht oder eine Anbindeschicht ist.

Durch das Vorsehen einer Schutzschicht, die das Rohr oder die Rohrverbindungsmuffe gegen Beschädigungen schützt oder eine Gleitschicht, die es ermöglicht, das Rohr mit der Verbindungsmuffe in einfacher Weise in den Erdboden einzubringen oder eine Markierungsschicht, die eine Information über das Rohr gibt oder eine Wärmeleitschicht, die eine weitere Verbesserung der Wärmeabfuhr vom Rohr zum Erdboden ermöglicht oder eine Anbindeschicht, die insbesondere eine enge Anbindung des Rohres an den Erdboden ermöglicht, wird die Rohranordnung der vorliegenden Erfindung weiter aufgewertet.

So kann in einer weiteren günstigen Ausführungsform der vorliegenden Erfindung vorgesehen sein, dass die Innenoberfläche der Wandung des Rohres durch ein Fluorpolymer, insbesondere ein Polytetrafluorethylen und / oder ein Polyamid und / oder durch ein Polyethylen und / oder durch Molybdändisulfid und / oder durch ein Silikonöl und / oder durch ein Schichtsilikat, insbesondere Talkum, gleitfähig modifiziert ist oder dass eine Schicht an der Innenoberfläche der Wandung des Rohres angeordnet ist, die ein Fluorpolymer, insbesondere Polytetrafluorethylen und / oder ein Polyamid und / oder ein Polyethylen und / oder Molybdändisulfid und / oder ein Silikonöl und / oder ein Schichtsilikat, insbesondere Talkum, enthält.

Durch das Vorsehen einer gleitfähig modifizierten Wandung des Rohres oder durch das Vorsehen einer Schicht an der Innenoberfläche des Rohres in der vorgenannten Ausführung kann in besonders einfacher Weise das Höchstspannungskabel in das Rohr der Rohranordnung eingebracht werden.

Durch die gleitfähige Modifizierung der Wandung des Rohres oder durch die Schicht an der Innenoberfläche der Wandung des Rohres, die gleitfähig ausgerüstet ist, ist es möglich, ohne großen Aufwand eine große Länge des Höchstspannungskabels in die Rohranordnung einzubringen.

Die Aufgabe der Erfindung, eine Stromleitungsanordnung anzugeben, erfährt ihre Lösung in Anspruch 10.

Im Rahmen der vorliegenden Erfindung wurde erkannt, dass eine Stromleitungsanordnung bereitgestellt werden kann, welche wenigstens ein Höchstspannungskabel und eine Rohranordnung gemäß vorstehender Beschreibung umfasst, in der das Höchstspannungskabel aufgenommen ist.

Eine solche Stromleitungsanordnung ist von großem Vorteil, da das Höchstspannungskabel in der Rohranordnung geschützt aufgenommen ist.

Solche Stromleitungsanordnungen sind in bevorzugter Weise unter der Erdoberfläche eingebaut.

Bei der vorliegenden Erfindung kann vorgesehen sein, dass in einem Graben im Erdboden der Raum um die Rohranordnung ein Verfüllmaterial, das Beton oder thermisch leitfähiger Beton oder ein thermisch stabilisierter Boden oder eine Mischung der vorgenannten ist, enthält.

Durch diese Maßnahme kann in besonders effektiver Weise Wärmeenergie, die beim Betrieb eines Höchstspannungskabels unweigerlich freigesetzt wird, an den umgebenden Erdboden abgeführt werden.

Bei der vorliegenden Erfindung hat es sich als sehr vorteilhaft erwiesen, wenn folgendes Verfahren zum Einbau einer Stromleitungsanordnung oder einer Rohranordnung unter der Erdoberfläche angewandt wird:
Im ersten Schritt ist ein Graben auszuheben, der etwas tiefer und breiter herzustellen ist als die Stromleitungsanordnung oder die Rohranordnung, die in diesen Graben unter der Erdoberfläche zu verlegen sind. Im Graben wird mit Verfüllmaterial ein Planum hergestellt, auf dem die Stromleitungsanordnung oder die Rohranordnung zu verlegen ist.

Es kann vorgesehen sein, dass die Stromleitungsanordnung im Graben eingebaut wird, die wenigstens ein Höchstspannungskabel und eine Rohranordnung umfasst, in der das Höchstspannungskabel aufgenommen ist, oder die Rohranordnung im Graben eingebaut wird, in die erst nach dem Einbau im Graben das wenigstens eine Höchstspannungskabel eingezogen wird, wodurch die Stromleitungsanordnung bereitgestellt wird.

In diesen Graben mit der dort platzierten Anordnung ist ein Verfüllmaterial, beispielsweise Beton oder thermisch leitfähiger Beton oder ein thermisch stabilisierter Boden oder ein Flüssigboden oder eine Mischung der vorgenannten, einzubringen.

Bei der Einbringung von Flüssigboden ist dafür Sorge zu tragen, dass die Rohranordnung oder die Anordnung von Rohranordnungen, in welches auch erst später das Höchstspannungskabel eingezogen werden kann, nicht durch Auftriebskräfte unerwünscht seine Lage verändert. Hierzu können geeignete Anker - wie beispielsweise Erdnägel - oder eine Auflast, beispielsweise in Form eines konturangepassten Betonbauteils eingesetzt werden, die dem Auftrieb entgegenwirken und die Lage der Rohranordnung im Graben fixieren.

Nachdem diese Anordnung etwas verfestigt ist, wozu beispielsweise ein Verdichtungsgerät einsetzbar ist bzw. im Falle eines eingebrachten Flüssigbodens nach einer gewissen Verfestigungszeit, kann durch Verfüllen des restlichen freien Raumes beispielsweise mit dem Aushub des Erdbodens bei der Herstellung des Grabens wieder das Niveau der Erdoberfläche hergestellt werden.

Daran anschließend kann dann das Höchstspannungskabel in die Rohranordnung eingezogen werden.

Auf diese Weise kann mit vergleichsweise einfachen Tiefbautechniken unter Verwendung der Rohranordnung der vorliegenden Erfindung eine Stromleitungsanordnung schnell und kostengünstig hergestellt werden, die hinsichtlich des Schutzes und der Abführung der Wärme optimiert ist.

Die Trasse der Stromleitungsanordnung kann dann in geeigneter Weise markiert werden, beispielsweise durch das Aufstellen von Markierungselementen, hierzu können Pfeiler oder Fahnen genutzt werden.

Weitere wichtige Merkmale und Vorteile der Erfindung ergeben sich aus den Unteransprüchen, aus den Fig. und aus der zugehörigen Figurenbeschreibung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Fig. dargestellt und werden in der nachfolgenden Beschreibung näher erläutert, wobei sich gleiche Bezugszeichen auf gleiche oder funktional gleiche oder ähnliche Bauteile beziehen.

Die vorliegende Erfindung wird anhand der beigefügten Figuren wie folgt näher erläutert:

Hierzu zeigt:
- Fig. 1:: eine schematische Querschnittsansicht einer Rohranordnung für die Verwendung gemäß vorliegender Erfindung;
- Fig. 2:: eine schematische Querschnittsansicht einer Stromleitungsanordnung;
- Fig. 3:: eine schematische Querschnittsansicht einer Stromleitungsanordnung in einer gegenüber Fig. 2 um 90° gedrehten Ansicht;
- Fig. 4:: eine schematische Querschnittsansicht einer Stromleitungsanordnung;
- Fig. 5a:: eine schematische Querschnittsansicht eines Erdbodens;
- Fig. 5b:: eine schematische Querschnittsansicht eines Grabens im Erdboden;
- Fig. 5c:: eine schematische Querschnittsansicht eines Grabens im Erdboden, in dem ein Planum hergestellt ist;
- Fig. 5d:: eine schematische Querschnittsansicht eines Grabens im Erdboden, an dessen Grund ein Planum hergestellt und darauf eine Stromleitungsanordnung angeordnet ist;
- Fig. 5e:: eine schematische Querschnittsansicht einer Stromleitungsanordnung, die in einem Graben im Erdboden, der verfüllt ist, eingebaut ist.

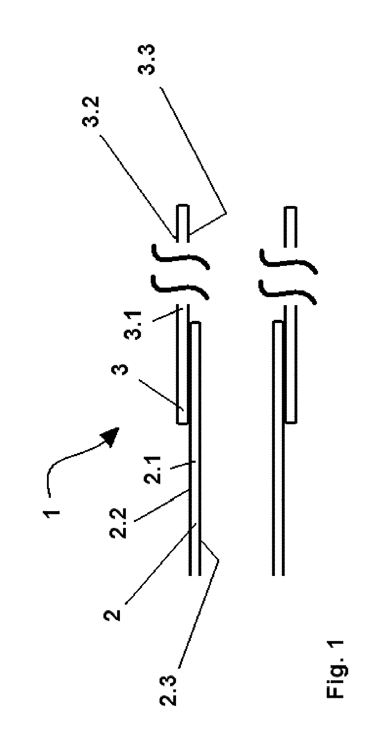

In Fig. 1 ist in einer schematischen Querschnittsansicht eine Rohranordnung 1 für die Verwendung gemäß vorliegender Erfindung gezeigt.

Die Rohranordnung 1 umfasst ein Rohr 2, das mit einer Rohrverbindungsmuffe 3 fluiddicht verbunden ist.

Die Verbindung des Rohres 2 mit der Rohrverbindungsmuffe 3 kann dabei durch eine Stecktechnik, durch eine Schweißtechnik oder durch eine Klebetechnik oder durch eine Kombination der vorstehend genannten Techniken erfolgen.

Mit großem Vorteil ist die Länge der Verbindungsmuffe 3 im Vergleich zu ihrem Durchmesser so gewählt, dass diese 1,2- bis 3-mal, insbesondere 1,5-mal so lang ist, wie ihr innerer Durchmesser beträgt. Auf diese Weise wird der Verbindungsstoß des Rohres 2 besonders gut geschützt.

Das Rohr 2 weist eine Wandung 2.1 auf, die das Lumen des Rohres 2 begrenzt. Die Wandung 2.1 des Rohres 2 besitzt eine Außenoberfläche 2.2 und eine Innenoberfläche 2.3. Die Rohrverbindungsmuffe 3 weist eine Wandung 3.1 auf. Die Wandung 3.1 der Rohrverbindungsmuffe 3 besitzt eine Außenoberfläche 3.2 und eine Innenoberfläche 3.3.

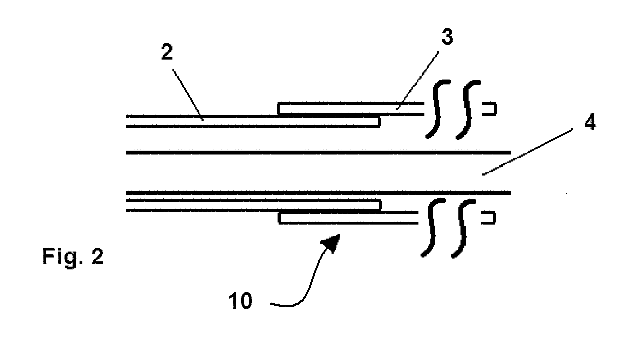

In Fig. 2 ist in einer schematischen Querschnittsansicht eine Stromleitungsanordnung 10 gezeigt, die die Rohranordnung 1 gemäß Fig. 1 verwendet.

Dazu ist im Lumen des Rohres 2, das fluiddicht mit einer Rohrverbindungsmuffe 3 verbunden ist, ein Höchstspannungskabel 4 angeordnet. In anderen hier nicht gezeigten Ausführungsarten der Erfindung kann vorgesehen sein, dass im Lumen des Rohres 2 mehr als ein Höchstspannungskabel 4 angeordnet ist, insbesondere dass zwei oder drei Höchstspannungskabel 4 angeordnet sind. Es können aber auch mehr als drei Höchstspannungskabel 4 im Lumen des Rohres 2 angeordnet sein.

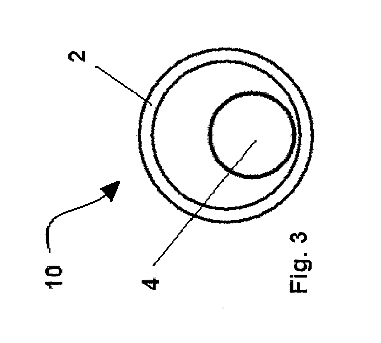

In Fig. 3 ist in einer schematischen Querschnittsansicht die Stromleitungsanordnung 10 aus Fig. 2 in einer um 90° gedrehten Abbildung gezeigt.

Im Lumen des Rohres 2, das fluiddicht mit einer Rohrverbindungsmuffe 3 verbunden ist, ist ein Höchstspannungskabel 4 angeordnet.

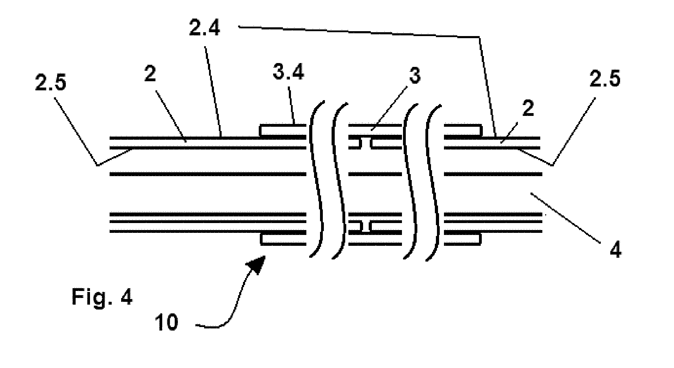

In Fig. 4 ist in einer schematischen Querschnittsansicht eine Stromleitungsanordnung 10 gezeigt, bei der zwei Rohre 2,2 mittels einer Rohrverbindungsmuffe 3 fluiddicht verbunden sind.

Die mithilfe der Rohrverbindungsmuffe 3 verbundenen Rohre 2, 2 weisen eine Schicht 2.4 an der Außenoberfläche der Rohre 2, 2 auf.

Die Schicht 2.4 ist im vorliegenden Fall eine Schutzschicht, die die Rohre 2, 2 gegen Beschädigungen bei der Herstellung, bei der Lagerung und beim Einbau in den Erdboden schützt.

Die Rohre 2, 2 weisen an ihrer Innenoberfläche eine Schicht 2.5 auf. Die Schicht 2.5 ist eine gleitfähig modifizierte Schicht, die das Einbringen des Höchstspannungskabels 4 in das Lumen der Rohre 2, 2 erleichtert. Im vorliegenden Fall ist die Schicht 2.5 eine Schicht, die Polymermaterial enthält und als gleitfähigen Zusatz ein Polytetrafluorethylen (PTFE).

Mit großem Vorteil ist die Länge der Rohrverbindungsmuffe 3 im Vergleich zu ihrem Durchmesser so gewählt, dass diese 1,2- bis 3-mal, insbesondere 1,5-mal so lang ist, wie ihr innerer Durchmesser beträgt. Auf diese Weise wird der Verbindungsstoß der Rohre 2, 2 besonders gut geschützt. Weiterhin ist die Verbindung der Kabelschutzrohre 2, 2 gegenüber unerwünschter Abwinkelung hinreichend stabilisiert.

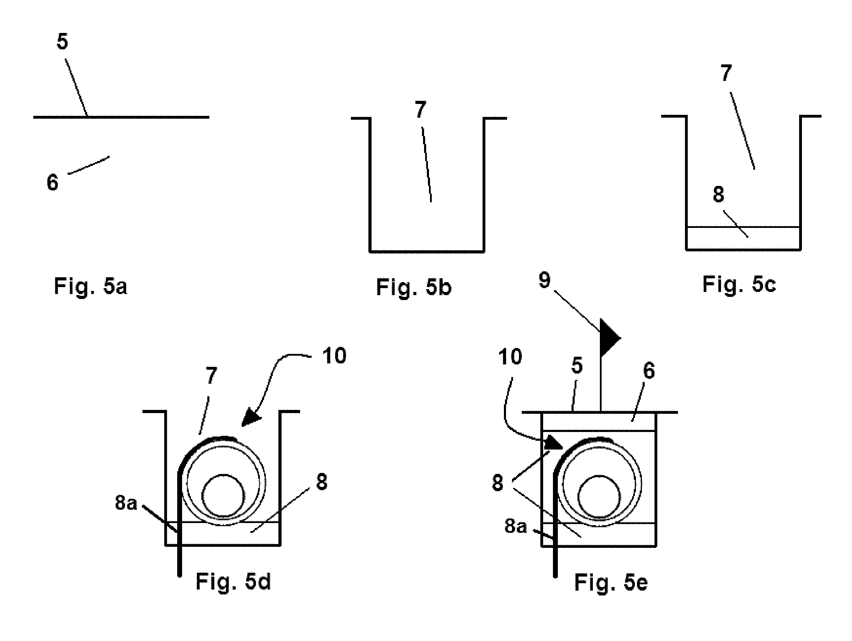

In Fig. 5a ist schematisch in einer Querschnittsansicht der Erdboden 6 und die Erdoberfläche 5 dargestellt.

Die Erdoberfläche 5 begrenzt die Ausdehnung des Erdbodens 6 nach oben, also entgegen der Schwerkraft.

In Fig. 5b ist in einer schematischen Querschnittsansicht ein Graben 7 gezeigt, der durch Ausheben von Erdboden 6 nach Durchbrechen der Erdoberfläche 5 hergestellt ist.

Der Graben 7 ist gemäß Abb. 5b mit etwa rechteckigen Querschnitt ausgebildet und kann in einfacher Weise beispielsweise mittels eines Baggers erzeugt werden.

Die Ausdehnung des Grabens 7 hinsichtlich Tiefe, Breite und Länge richtet sich nach den Erfordernissen und technischen Vorgaben, darin eine Stromleitungsanordnung 10 einzubauen. Insbesondere kann der Graben 7 in einer anderen Ausbildung auch einen etwa trapezförmigen Querschnitt aufweisen.

In Fig. 5c ist in einer schematischen Querschnittsansicht der Graben 7 gezeigt, an dessen Grund ein Planum aus Verfüllmaterial 8 hergestellt ist.

Das Planum aus Verfüllmaterial 8 ist etwa horizontal ausgerichtet und kann beispielsweise unter Zuhilfenahme eines Verdichtungsgerätes verdichtet sein. Es bildet den Unterbau für die darauf anzuordnende Rohranordnung 1 bzw. Stromleitungsanordnung 10.

In Fig. 5d ist in einer schematischen Querschnittsansicht der Graben 7 gezeigt, an dessen Grund ein Planum aus Verfüllmaterial 8 hergestellt und darauf die Stromleitungsanordnung 10 angeordnet ist.

Bei der Stromleitungsanordnung 10 ist im Lumen der Rohranordnung 1 wenigstens ein Höchstspannungskabel 4 angeordnet.

Zum Einbau der Rohranordnung 1 bzw. der Stromleitungsanordnung 10 im Graben 7 ist dieses zunächst auf dem Planum des Verfüllmaterials 8 am Grund des Grabens 7 zu positionieren.

Der Freiraum um die Rohranordnung 1 bzw. die Stromleitungsanordnungen 10 im Graben 7 ist mit einem Verfüllmaterial 8, beispielsweise einem Beton oder einem thermisch leitfähigen Beton oder einem thermisch stabilisierten Boden aufzufüllen. Die Auffüllung ist dabei derartig vorzunehmen, dass Verfüllmaterial 8 in einer bestimmten Höhe über der Rohranordnung 1 bzw. der Stromleitungsanordnung 10 zum Liegen kommt, so dass diese geschützt und eingebettet ist.

Bei der Einbringung eines Verfüllmaterials 8 in Form von Flüssigboden ist dafür Sorge zu tragen, dass die Rohranordnung 1 bzw. die Stromleitungsanordnung 10 nicht durch Auftriebskräfte unerwünscht eine Lageänderung erfährt. Hierzu können geeignete Anker - wie beispielsweise Erdnägel 8a - oder eine Auflast, beispielsweise in Form eines konturangepassten Betonbauteils eingesetzt werden, die dem Auftrieb entgegenwirken und die Lage der Rohranordnung 1 bzw. der Stromleitungsanordnung 10 im Graben 7 fixieren. Vorteilhafterweise wird das Verfüllmaterial 8 verdichtet, wozu beispielsweise ein Verdichtungsgerät heranziehbar ist. Mithilfe des Verdichtungsgeräts ist es einfach, das Verfüllmaterial 8 im Graben 7 etwa so zu verdichten, dass eine horizontale Abschlussfläche nach oben hergestellt und ein guter Kontakt des Verfüllmaterials 8 zu der Rohranordnung 1 bzw. der Stromleitungsanordnung 10 ohne Spaltbildung erzielt wird. Dadurch ist diese fest im Verfüllmaterial 8 eingebettet und die Ableitung von Wärme kann in den Erdboden 6 effektiv erfolgen. Alternativ kann das Verfüllmaterial 8 auch als Flüssigboden selbstverdichtend eingebracht werden.

In Fig. 5e ist abschließend ein schematischer Querschnitt einer Stromleitungsanordnung 10 gezeigt.

Diese ist in einem verfüllten Graben 7 angeordnet.

Sie umfasst eine Rohranordnung 1, in der ein Höchstspannungskabel 4 aufgenommen ist. Durch die erfindungsgemäße Verwendung der Rohranordnung 1 ist das Höchstspannungskabel 4 einerseits geschützt, anderseits wird die beim Stromfluss entstehende Wärme an den Erdboden abgeleitet.

Der vorher bestehende Graben 7 ist mit Erdboden 6 wieder aufgefüllt und verdichtet, so dass die ursprünglich vorhandene Erdoberfläche 6.1 in etwa wieder hergestellt ist.

Die Trasse der Stromleitungsanordnung 10 ist durch ein Markierungselement 9, im vorliegenden Fall beispielsweise eine Fahne, gekennzeichnet.

### Bezugszeichenliste

- 1: Rohranordnung
- 2: Rohr
- 2.1: Wandung des Rohres
- 2.2: Außenoberfläche
- 2.3: Innenoberfläche
- 2.4: Schicht
- 2.5: Schicht
- 3: Rohrverbindungsmuffe
- 3.1: Wandung der Rohrverbindungsmuffe
- 3.2: Außenoberfläche
- 3.3: Innenoberfläche
- 3.4: Schicht
- 4: Höchstspannungskabel
- 5: Erdoberfläche
- 6: Erdboden
- 7: Graben
- 8: Füllmaterial
- 8a: Erdnagel
- 9: Markierungselement
- 10: Stromleitungsanordnung

## Patentansprüche

1. Verwendung einer Rohranordnung (1), umfassend wenigstens ein Rohr (2) und wenigstens eine Rohrverbindungsmuffe (3), die mit dem Rohr (2) fluiddicht verbunden ist und die mit einem weiteren Rohr (2) fluiddicht verbindbar ist, wobei das Rohr (2) und die Rohrverbindungsmuffe (3) eine Wandung (2.1, 3.1) aufweisen, die ein thermoplastisches Polymermaterial enthält, mit folgenden Merkmalen:
- das thermoplastische Polymermaterial ist ausgewählt aus einem Polyolefin, bevorzugt aus einem Polyethylen oder einem Polypropylen oder einem Polyisobutylen oder einem Copolymer der vorgenannten Polymere, oder einem halogenhaltigen Polymermaterial, bevorzugt einem Polyvinylchlorid oder einem Polyvinylidenfluorid,
- das Polymermaterial ist thermisch stabilisiert,
- das E-Modul des Polymermaterials bei 60°C ist für Polyethylen >= 150 N/mm², für Polypropylen >= 400 N/mm²,
- die Innenoberfläche (2.3, 3.3) der Wandung des Rohres (2) und / oder der Rohrverbindungsmuffe (3) ist gleitfähig modifiziert,
zur Aufnahme wenigstens eines Höchstspannungskabels (4).

2. Verwendung einer Rohranordnung (1) nach Anspruch 1, **dadurch gekennzeichnet, dass** das thermoplastische Polymermaterial ein Polyethylen mit erhöhter Temperaturbeständigkeit, insbesondere ein PE-RT (Polyethylen of Raised Temperature resistance), ausgewählt z. B. aus einem Ethylen-Octen-Copolymer ist.

3. Verwendung einer Rohranordnung (1) nach Anspruch 1 oder 2, **dadurch gekennzeichnet, dass** das Rohr (2) und die Rohrverbindungsmuffe (3) das gleiche Polymermaterial enthalten.

4. Verwendung einer Rohranordnung (1) nach einem der vorangehenden Ansprüche, **dadurch gekennzeichnet, dass** das Rohr (2) und die Rohrverbindungsmuffe (3) durch eine Stecktechnik und / oder eine Schweißtechnik und / oder eine Klebtechnik verbunden sind.

5. Verwendung einer Rohranordnung (1) nach einem der vorangehenden Ansprüche, **dadurch gekennzeichnet, dass** das thermoplastische Polymermaterial einen wärmeleitenden Zuschlagstoff, ausgewählt aus einem Metall und / oder einem Glas und / oder einem Metalloxid und / oder einem Metallhalogenid und / oder einem Metallsulfat und / oder einem Metallphosphat und / oder einem Metallsilikat und / oder einem Metallcarbonat enthält.

6. Verwendung einer Rohranordnung (1) nach einem der vorangehenden Ansprüche, **dadurch gekennzeichnet, dass** angrenzend an die Wandung (2.1, 3.1) des Rohres (2) und / oder der Rohrverbindungsmuffe (3) und mit dieser verbunden wenigstens eine weitere Schicht vorhanden ist.

7. Verwendung einer Rohranordnung (1) nach Anspruch 6, **dadurch gekennzeichnet, dass** an der Außenoberfläche (2.2, 3.2) des Rohres (2) und / oder der Rohrverbindungsmuffe (3) eine Schicht (2.4, 3.4) angeordnet ist, die insbesondere eine Schutzschicht oder eine Gleitschicht oder eine Markierungsschicht oder eine Wärmeleitschicht oder eine Anbindeschicht ist.

8. Verwendung einer Rohranordnung (1) nach Anspruch 6, **dadurch gekennzeichnet, dass** die Innenoberfläche (2.3) der Wandung (2.1) des Rohres (2) durch ein Fluorpolymer, insbesondere Polytetrafluorethylen, und / oder durch ein Polyamid und / oder durch ein Polyethylen und / oder durch Molybdändisulfid und / oder durch ein Silikonöl und / oder durch ein Schichtsilikat, insbesondere Talkum, gleitfähig modifiziert ist oder dass eine Schicht (2.5) an der Innenoberfläche (2.3) der Wandung (2.1) des Rohres (2) angeordnet ist, die ein Fluorpolymer, insbesondere Polytetrafluorethylen, und / oder ein Polyamid und / oder ein Polyethylen und / oder Molybdändisulfid und / oder ein Silikonöl und / oder ein Schichtsilikat, insbesondere Talkum, enthält.

9. Verwendung einer Rohranordnung (1) nach einem der vorangehenden Ansprüche, **dadurch gekennzeichnet, dass** zwei oder drei Höchstspannungskabel (4) aufgenommen sind.

10. Stromleitungsanordnung (10), umfassend wenigstens ein Höchstspannungskabel (4) und eine Rohranordnung (1) nach einem der Ansprüche 1 bis 9, in der das Höchstspannungskabel (4) aufgenommen ist.
